# EUROPEAN PATENT SPECIFICATION

(11) **EP 0 468 447 B1**
(45) Date of publication and mention of the grant of the patent: **22.01.1997**
(21) Application number: 91112330.5
(22) Date of filing: 23.07.1991
(51) Int. Cl.: H04N 7/087

(54) **Improved information transmission method**
Verbessertes Informationsübertragungsverfahren
Méthode de transmission d'information améliorée

(30) Priority: 24.07.1990 IT 6757790
(43) Date of publication of application: 29.01.1992
(73) Proprietor: RAI RADIOTELEVISIONE ITALIANA, 00195 Roma (IT)
(72) Inventor: D'Amato, Paolo, I-00195 Roma (IT)
(74) Representative: Dini, Roberto, Dr. Ing.

(56) References cited:
- EP-A- 0 306 208
- RUNDFUNKTECHNISCHE MITTEILUNGEN vol. 31, no. 2, March 1987, NORDERSTEDT, GERMANY pages 83 - 93 G. EITZ, K. U. OBERLIES, H. KOCH 'TOP- EIN VERFAHREN ZUR VEREINFACHTEN ANWAHL VON FERNSEHTEXT -TAFELN DURCH DEN ZUSCHAUER'
- FUNKSCHAU no. 3, 1988, MUENCHEN, GERMANY pages 46 - 49 G.EITZ , K. U. OBERLIES, H. KOCH 'DIE NAECHSTE STUFE'
- Pütz et al.: Alles über Fernsehen, Video, Satellit; vgs; Köln 1989; pages 253 - 258

## Description

The present invention relates to an improved information transmission system, under the form of a plurality of pages, included in the television signal, and comprising a plurality of control tables containing data relative to the transmitted pages and their contents, so as to facilitate the search by the user. It is known that the major restraint of the information transmission system associated to the television signal, known by the international name of Teletext and by the name Televideo in Italy, consists in the access time, that is the intervening time from the moment the user has selected a page and the moment in which the chosen page appears on the television screen.

This problem could be solved by supplying television sets with a decoder able to memorise all of the transmitted pages; such pages amount to almost 1000 on the Televideo service; the cost of such a memory today does not permit a commercial product of this type. The multipage decoders currently available have a memory capacity of 4 to 80 pages and it is unlikely that the situation will substantially change within the next few years.

Furthermore, in order to permit the decoder to operate according to simple algorithms, it would be necessary to transmit, for each set of rolling pages, the number of pages contained: only in such a way could the decoder know in advance just how much memory has to be reserved for each set.

To be able to make best use of the existing memory capacity it has been suggested to transmit data that allow the decoder to decide which pages would be useful to memorise, in addition to those selected by the user.

In Great Britain a system has been developed named FLOF, that is based on the principle of associating each page with one or more ghost rows, in which the addresses of pages that the user is likely to call subsequently are indicated, these pages being logically connected to the selected page. In practicy FLOF associates 4 addresses to each page, which correspond to 4 four coloured keys on the TV remote control unit. In another ghost row visualised as the 25th row, the titles of the four pages which can be immediately accessed are indicated. This implementation of FLOF, known by the name FASTEXT is optimised for decoders with a memory of 4 pages.

The FLOF system presents the following drawbacks:
- requires considerable editorial work in determining the links of each of the 1000 pages; such links may vary when the pages content change;
- does not provide any information on the number of pages contained in aech multipage set. These limitations have prevented a general adoption of FLOF, which after being introduced in Great Britain several years ago, has subsequently been adopted only in some European countries.

Recent proposals have been made as to enhance FLOF by adding the information relevant to the size of multipage sets; such information, for the way in which it would be coded would occupy 8 pages (one for each magazine, i.e. the so called "magazine inventory page") so that it would subtract non negligible transmission resources to the normal service.

A second system, developed more recently in Germany, is the so called TOP (Table Of Pages), which is based on the principle of organising the teletext data base on two levels; blocks and groups. There exists a general index, that is the block index; generally speaking each block begins with a subindex, that lists the groups in which each block is subdivided; finally each group begins with a subindex, which bears the list of the pages of the group.

In its first implementation TOP provided for the transmission of only one control page, including the so called "basic TOP table"; such a table contains 800 characters, one for each page of the database; every character contains the following information:
- whether the page exists;
- whether the page is a normal page of a group, or a group or block index, or a page of subtitles or the first page of a group containing television programmes.

The television set remote control unit contains:
- a key for directly calling the general index;
- a key for directly calling the subtitle page;
- a key for directly calling the TV programme page;
- 4 coloured keys that respectively allow access to:
   the next existing page;
   the index of the next group;
   the index of the next block;
   the previously selected page.

By means of these keys the user has a high probability of finding the desired page reducing to a minimum the amount of time he has to wait, as the pages that have been selected have almost certainly been memorised by the decoder beforehand. TOP therefore represents an improvement for the user.

TOP has recently under gone the addition of two additional tables:
- the "multipage table", organised as the "basic table" and indicating the size of each multipage set;
- the table of the additional information, that allows for the viewing on the 25th row, as with FLOF, the title of the next group and of the next block accessible by use of the two coloured keys dedicated to S this purpose. The same table also offers a second possibility, that is to supply a list of more frequently consulted pages, obtained by a two figure number.

For obtaining further information as to the TOP system the existing literature may be consulted, such as the European patent application EP-A-0 264 565.

The TOP system also presents drawbacks.

The basic table does not provide the indication of the main index, which is therefore always assumed to be at page 100; it does not mention the presence of newsflashes; a code for marking the Telesoftware pages is not provided, nor for the pages reserved for closed groups of users.

The multipage table uses the Hamming code 8/4 and allows for the attribution of only 16 combinations to each page, which are insufficient, considering also that to provide the row for future extensions, the number of pages that can be specified is limited to a maximum of 10: this prevents the multipage decoder from allocating memory spaces to sets containingmore than 10 pages.

Finally, and it is the most significant problem, the basic TOP table and the multipage table require a continuous updating: in fact at every cancellation or insertion of a page it becomes necessary, without delay, to update both tables with the shortest possible delay in order to avoid inconsistencies between the database and the control tables.

The aim of the present invention is therefore that of indicating an improved teletext transmission method that does not present, or presents at a much lower level, the inconveniences mentioned of the known systems.

To obtain such aims the present invention has as its object an improved teletext transmission method as defined in claim 1.

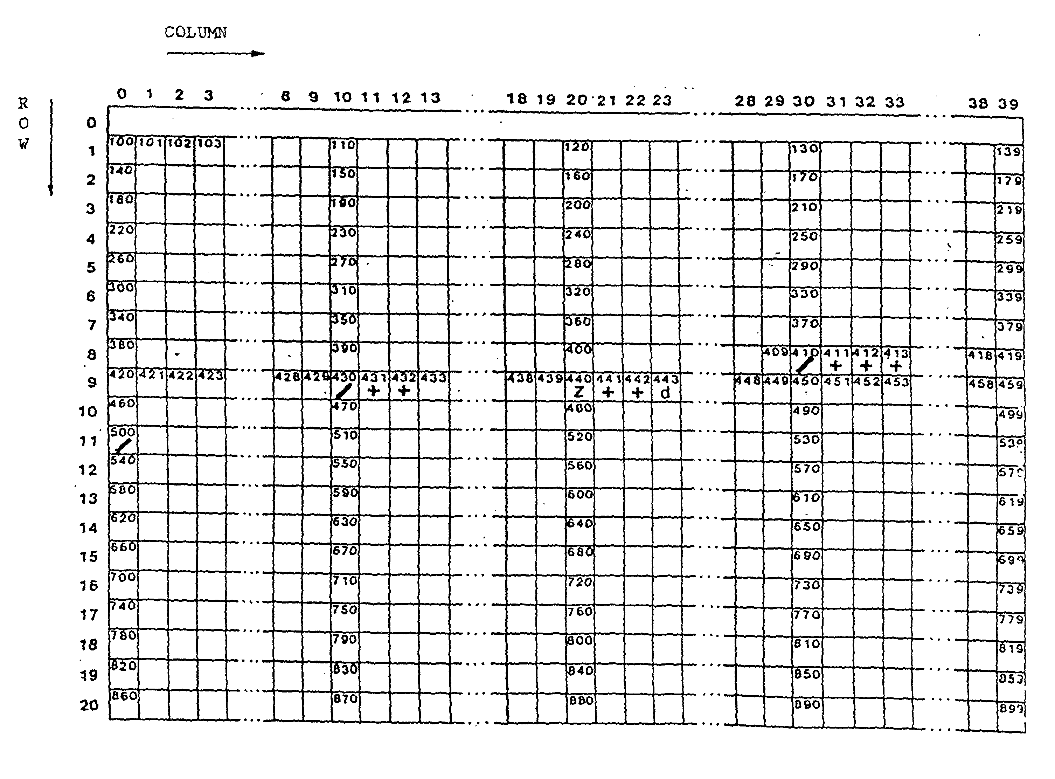

Further aims and advantages of the present invention become clear from the following description and from the drawings, supplied as a non limiting example, wherein
Figure 1 represents a diagram of the contents of a page containing the basic TOP table according to actual standards.

To allow for a better understanding of the invention, a brief description follows, with the aid of the figure, of the structure of said basic table.

The enclosed figure shows an example of the content of said said table; as is seen the control data relevant to the 800 pages contained in a cycle (each may represent a static page or a multipage set) are contained in a table composed of 20 rows of 40 characters each; some of the pages are indicated with specific symbols: for example in the figure pages 410, 430 and 500 are indicated with the "/" character, as they are the first static pages of certain groups; page 440 is indicated with Z as it is the first page of a group and is also a multipage (set) of 2 pages (440/1, 444/2); the pages 411, 412, 413, 431, 432, 441 and 442 are normal static pages; finally page 443 is indicated with the character d as it is a normal multipage (set), consisting of four pages (443/1, 443/2, 443/3, 443/4).

The invention is based on the acknowledgement of the fact that the information contained in the three tables of TOP are of two types, fundamentally different between themselves, precisely of an editorial character and of a technical character; the information of an editorial character is relevant to the page contents (titles, subtitles, TV programmes, indexes and so on); the information of a technical character is the fact that a given page is in the cycle or not, the number of pages contained in a rolling set, etc.

With an examination of the tables provided in the actual TOP system, it is evident that the information contained in the basic table (A) is of editorial nature, apart from two items that are of a technical nature: 'page present in cycle', and whether the page is static or multipage sets. The information contained in the multipage table (B) is of only technical nature, while the contents of the addition information (C) is only of editorial nature.

It is noted that the information of editorial nature must necessarily be manually put in the teletext generation computer, but this information seldom requires updating; on the contrary the information of technical nature requires a more frequent updating, but this information can be managed by the computer itself, that can automatically update the control tables every time that a page is added or removed.

Taking the aforementioned considerations in view, the present invention intends to move the information 'page present in cycle' from the basic table (A) to the multipage table (B), and to remove from the basic table the information "static or rolling set", already contained in the multipage table, furthermore according to the invention, said table (B) is automatically updated by the teletext generation computer, or by an other auxiliary computer, connected to it.

The other two tables (A, C) will be updated manually by the editor, by means of a suitable terminal connected to the teletext generation computer, every time that there is the necessity. As said computer works on tables different from those which are updated automatically, possible problems caused by mutual interference between automatic and manual operations are eliminated.

The multipage table will preferably be received and processed by the teletext decoder once every cycle, while the other two tables (A, C) may be processed by the teletext decoder only when it is necessary, i.e. when a change has occurred.

The updating of said tables A and C can be indicated by appropriate flags inserted in the multipage table, and the decoder can be instructed to process said two tables, only when the relevant flags are raised. Of course this does not apply during initialisation procedure (receivers switched on or channel change), when all tables must be processed as soon as possible.

The multipage table must contain more information than that actually provided: this may be achieved by doubling the table or adding to the present table a second table of the same type (Hamming code 8/4), or abandoning the costly Hamming code, and using another error detection system, for example introducing a CRC (Cyclic Redundance Check), as provided in the telesoftware. Said CRC may be constituted by a couple of characters for every row, consequently it is able to find allocation in an additional line (2 x 20 = 40 characters).

The mentioned second solution (note Italian patent application N"19157-A/88) appears to be clearly tidier, nevertheless it represents a more radical modification with respect the actual standards, for which the first may be preferable. In both cases the inadequate space in the table will be remedied, dedicating 8 information bits to each file multipage set of 4; it therefore becomes possible to identify up to 225 pages per set.

At the present the subcode of the basic table provides a continuity index; that is a three bit number that is increased by 1 each time that any of the tables is modified; in this way the decoder can understand whether changes have been verified in the tables and, in the affirmative case, it memorises them. It is proposed to introduce the continuity index in the multipage table and to remove it from the basic table. Alternately it is proposed the non utilisation of the subcode for said inappropriate purpose of signalling the updates (thus avoiding the problems that can arise with some teletext generation system, that are not able to transmit pages with an arbitratory chosen subcode).

It is observed that the standard teletext already provides, in every page a control bit, denominated C8 (in row 0), that is utilised as an update indicator: i.e., it is set to 1 each time that the page contents changes.

It is also proposed to specify in the basic table, using three of the four bit combinations actually free, the main index, the telesoftware page and the pages addressed to closed user groups, so as to avoid the possibility that these pages be overwritten by mistake by the teletext editors, not being signalled, as excluded from the teletext services for the general public.

To resume the proposals are:
- remove the information "page not in cycle" and "static page or rolling set" from the basic table.
- insert in the basic table other symbols for distinguishing pages of other types not specified in present TOP standard such as the main index, telesoftware pages and those addressed to closed user groups;
- duplicate the multipage table in such a way as to allow for the indication of up to 225 pages per set (or to change the coding of the said table so as to reach the same aim without doubling the table);
- to remove the information "page present in cycle" from the basic table;
- to remove from the subcode of the basic table the continuity index and to insert it in the subcode of the multipage table (or to remove it and utilise multipage bit C8 for signalling the updates);
- to modify accordingly the decoder, that, in particular, should receive and process the multipage table and not the basic table, every cycle.

The characteristics of the system described become clear from the effected description. From the description the advantages of the system object of the present invention also become evident.

In particular the advantages are represented by the following:
- the indications concerning page contents are completed as regards telesoftware pages, pages for closed group of users and to the main index;
- the capacity of the multipage table extended from 16 pages per set to 225 pages per set;
- the frequent modification of the multipage table B can be carried out automatically by the teletext generation computer, while the manual updating work of the other two tables A and C can be undertaken occasionally when needed.

The possible elimination of the continuity index from the subcodes of all of the tables eliminates the problems caused by the limitations of some teletext generation systems does not cause inconveniences as the decoder receive and processes at every cycle the multipage table.

## Claims

1. Method for transmission of information, under the form of a plurality of pages, included in a television signal and comprising a plurality of control tables containing relevant data of the transmitted pages and of their contents, in order to make easier the search of the pages by the user, characterised by the fact that the method provides for the data which require to be immediately updated to be contained in a first (B) of the said control tables, so that the relevant data can be automatically changed by a transmission computer every time that there is the necessity, while the others (A and C) of said control tables can be updated at longer time intervals.

2. Method for transmission of information according to claim 1, characterised by the fact that said first (B) of the said control tables contains all the data of technical nature, while the other tables (A and C) contain all the data of editorial nature.

3. Method for transmission of information according to claim 2, characterised by the fact that said first (B) of the said control tables contains the following information:
- page present in cycle;
- static page or multipage and, in the second case, the number of the pages of every multipage set.

4. Method for transmission of information according to claim 2, characterised by the fact that said first (B) of the said control tables also contains a continuity subindex that is a three bit number that is increased by 1 every time that any of the tables are modified.

5. Method for transmission of information according to claim 2, characterised by the fact that said first (B) of the said control tables utilises the bit C8 of line 0 as an update indicator and that consequently the continuity subindex is removed from all of the other tables.

6. Method for transmission of information according to claim 3, characterised by the fact that said first (B) of the said control tables has the capacity to allocate for each set of rolling pages a number of up to 225 pages.

7. Method for transmission of information according to claim 6, characterised by the fact that said first (B) of the said control tables consists of two pages of 20 rows of 40 characters each and uses the Hamming code 8/4.

8. Method for transmission of information according to claim 6, characterised by the fact that said first (B) of the said control tables consists of a page of 20 rows of 40 characters and uses a line CRC for an adequate protection of the data.

9. Method for transmission of information according to claim 8, characterised by the fact that said CRC is constituted by a couple of characters for every row and consequently can find allocation in an additional line (2x20=40 characters).

10. Method for transmission of information according to claim 2, characterised by the fact that a second of said tables (A) contains the following data:
- whether the page is a normal page of a group,
- or a telesoftware page,
- or a page addressed to a closed group of users,
- or a group index,
- or a block index,
- or the main index,
- or a page of subtitles,
- or the first page of a group containing the television programmes.

## Patentansprüche

1. Verfahren zur Übertragung von Informationen in der Form mehrerer Seiten in einem Femsehsignal und mit mehreren Steuerungstabellen, welche relevante Daten der übertragenen Seiten und ihres Inhalts enthalten, um die Suche der Seiten für den Bediener zu erleichtem,
dadurch gekennzeichnet, daß bei dem Verfahren die Daten, welche sofort aktualisiert werden müssen, in einer ersten (B) der Steuerungstabellen enthalten sind, so daß die relevanten Daten durch einen Übertragungsrechner bei Bedarf jederzeit automatisch veränderbar sind, während die anderen (A und C) der Steuerungstabellen in längeren Zeitabschnitten aktualisiert werden können.

2. Verfahren zur Übertragung von Informationen nach Anspruch 1,
dadurch gekennzeichnet, daß die erste (B) der Steuerungstabellen alle Daten technischer Art enthält, während die anderen Tabellen (A und C) alle Daten redaktioneller Art enthalten.

3. Verfahren zur Übertragung von Informationen nach Anspruch 2,
dadurch gekennzeichnet, daß die erste (B) der Steuerungstabellen die folgenden Informationen enthält:
- momentan umlaufende Seiten;
- statische Seite oder Mehrfachseite, und im zweiten Fall die Anzahl der Seiten jedes Mehrfachseitensatzes.

4. Verfahren zur Übertragung von Informationen nach Anspruch 2,
dadurch gekennzeichnet, daß die erste (B) der Steuerungstabellen ebenfalls einen Kontinuitäts-Subindex enthält, der eine 3-Bit-Zahl ist, die jedes Mal um 1 erhöht wird, wenn eine der Tabellen modifiziert wird.

5. Verfahren zur Übertragung von Informationen nach Anspruch 2,
dadurch gekennzeichnet, daß die erste (B) der Steuerungstabellen das Bit C8 der Zeile 0 als Aktualisierungsanzeige verwendet und daß danach der Kontinuitäts-Subindex von allen anderen Tabellen entfernt wird.

6. Verfahren zur Übertragung von Informationen nach Anspruch 3,
dadurch gekennzeichnet, daß die erste (B) der Steuerungstabellen die Kapazität hat, für jeden Satz umlaufender Seiten eine Anzahl von bis zu 225 Seiten zu belegen.

7. Verfahren zur Übertragung von Informationen nach Anspruch 6,
dadurch gekennzeichnet, daß die erste (B) der Steuerungstabellen aus zwei Seiten mit 20 Zeilen mit jeweils 40 Zeichen besteht und den Hamming-Code 8/4 verwendet.

8. Verfahren zur Übertragung von Informationen nach Anspruch 6,
dadurch gekennzeichnet, daß die erste (B) der Steuerungstabellen aus einer Seite aus 20 Zeilen mit 40 Zeichen besteht und eine Zeilen-CRC für einen geeigneten Schutz der Daten verwendet.

9. Verfahren zur Übertragung von Daten nach Anspruch 8,
dadurch gekennzeichnet, daß die CRC gebildet ist durch zwei Zeichen für jede Zeile und daher eine zusätzliche Zeile (2 x 20 = 40 Zeichen) belegt.

10. Verfahren zur Übertragung von Informationen nach Anspruch 2,
dadurch gekennzeichnet, daß eine zweite der Tabellen (A) die folgenden Daten enthält:
- ob die Seite eine normale Seite einer Gruppe ist,
- oder eine Telesoftware-Seite,
- oder eine an eine geschlossene Benutzergruppe adressierte Seite,
- oder ein Gruppenindex,
- oder ein Blockindex,
- oder der Hauptindex,
- oder eine Seite mit Untertiteln,
- oder die erste Seite einer Gruppe, welche die Femsehprogramme enthalten.

## Revendications

1. Procédé pour la transmission d'information sous la forme d'une pluralité de pages incluses dans un signal de télévision et comprenant une pluralité de tables de commande, contenant des données appropriées des pages transmises et de leur contenu, afin de rendre plus facile la recherche des pages par l'utilisateur, caractérisé par le fait que le procédé prévoit que les données qui doivent immédiatement mises à jour sont contenues dans une première (B) desdites tables de commande, de sorte que les données appropriées puissent être automatiquement changées par un ordinateur de transmission à chaque fois qu'il est nécessaire, tandis que les autres (A et C) desdites tables de commande peuvent être mises à jour à des intervalles de temps plus longs.

2. Procédé pour la transmission d'information selon la revendication 1, caractérisé par le fait que ladite première (B) desdites tables de commande contient toutes les données de nature technique, tandis que les autres tables (A et C) contiennent toutes les données de nature éditoriales.

3. Procédé pour la transmission d'information selon la revendication 2, caractérisé par le fait que ladite première (B) desdites tables de commande contient les informations suivantes:
- page présente dans le cycle;
- page statique ou multipage et, dans le second cas, le nombre de pages de chaque ensemble de multipage.

4. Procédé pour la transmission d'information selon la revendication 2, caractérisé par le fait que ladite première (B) desdites tables de commande contient aussi un sous-index de continuité qui est un nombre à trois bits qui est augmenté de 1 à chaque fois qu'une des tables est modifiée.

5. Procédé pour la transmission d'information selon la revendication 2, caractérisé par le fait que ladite première (B) table de commande utilise le bit C8 de la ligne 0 comme indicateur de mise à jour, et que, en conséquence, le sous-index de continuité est supprimé de toutes les autres tables.

6. Procédé pour la transmission d'information selon la revendication 3, caractérisé par le fait que ladite première (B) desdites tables de commande a la capacité d'affecter pour chaque ensemble de pages déroulantes un nombre pouvant aller jusqu'à 225 pages.

7. Procédé pour la transmission d'information selon la revendication 6, caractérisé par le fait que ladite première (B) desdites tables de commande est constituée de deux pages de 20 rangées de 40 caractères chacune et utilise un code de Hamming 8/4.

8. Procédé pour la transmission d'information selon la revendication 6, caractérisé par le fait que ladite première (B) desdites tables de commande est constituée d'une page de 20 rangées de 40 caractères et utilise un contrôle par redondance cyclique de ligne pour une protection adéquate des données.

9. Procédé de transmission des informations selon la revendication 8, caractérisé par le fait que ledit contrôle par redondance cyclique utilise un couple de caractères pour chaque rangée, et peut en conséquence trouver sa place dans une ligne supplémentaire (2x20=40 caractères).

10. Procédé de transmission des informations selon la revendication 2, caractérisé par le fait qu'une seconde desdites tables (A) contient les données suivantes:
- indication du fait que la page est une page normale d'un groupe,
- ou une page de logiciel téléchargé
- ou une page adressée à un groupe fermé d'utilisateurs,
- ou un index de groupe,
- ou un index de bloc,
- ou l'index principal,
- ou Une page de sous-titres,
- ou la première page d'un groupe contenant les programmes de télévision.
